Europäisches Patentamt

European Patent Office

Office européen des brevets

(11) Publication number: **0 264 922 B1**

## EUROPEAN PATENT SPECIFICATION

(45) Date of publication of patent specification: **29.07.92**

(51) Int. Cl.5: **C09K 11/86**

(21) Application number: **87115363.1**

(22) Date of filing: **20.10.87**

The file contains technical information submitted
after the application was filed and not included in
this specification

(54) **Phosphor and radiation image storage panel employing the same.**

(30) Priority: **20.10.86 JP 248851/86**

(43) Date of publication of application:
**27.04.88 Bulletin 88/17**

(45) Publication of the grant of the patent:
**29.07.92 Bulletin 92/31**

(84) Designated Contracting States:
**DE FR NL**

(56) References cited:
**EP-A- 0 083 071**
**EP-A- 0 102 051**
**EP-A- 0 107 192**

**PATENT ABSTRACTS OF JAPAN, vol. 10, no.
239 (C-367)[2295], 19th August 1986; & JP-
A-61 72 091 (KONISHIROKU PHOTO IND CO.
LTD) 14-04-1986**

(73) Proprietor: **Fuji Photo Film Co., Ltd.
210 Nakanuma Minamiashigara-shi
Kanagawa-ken(JP)**

(72) Inventor: **Nakamura, Takashi Fuji Photo Film
Co., Ltd.
No. 798, Miyanodai Kaisei-machi
Ashigara-kami-gun Kanagawa(JP)**
Inventor: **Umemoto, Chiyuki Fuji Photo Film
Co., Ltd.
No. 798, Miyanodai Kaisei-machi
Ashigara-kami-gun Kanagawa(JP)**
Inventor: **Kojima, Yasushi Fuji Photo Film Co.,
Ltd.
No. 798, Miyanodai Kaisei-machi
Ashigara-kami-gun Kanagawa(JP)**
Inventor: **Takahashi, Kenji Fuji Photo Film Co.,
Ltd.
No. 798, Miyanodai Kaisei-machi
Ashigara-kami-gun Kanagawa(JP)**

(74) Representative: **Patentanwälte Grünecker,
Kinkeldey, Stockmair & Partner
Maximilianstrasse 58
W-8000 München 22(DE)**

**Description**

This invention relates to a divalent europium activated barium fluorohalide phosphor and a radiation image storage panel employing the same.

It is well known that a divalent europium activated barium fluorobromide phosphor (BaFBr:Eu$^{2+}$) gives an emission (spontaneous emission) in the near ultraviolet to blue region when exposed to a radiation such as X-rays.

Recently, it has been found that the divalent europium activated barium fluorobromide phosphor absorbs and stores a portion of radiation energy when exposed to a radiation such as X-rays, and emits light (stimulated emission) in the near ultraviolet to blue region when excited with an electromagnetic wave within a wavelength region of 450 - 900 nm after exposure to the radiation. In particular, the phosphor has been paid much attention and investigated as a stimulable phosphor employable for a radiation image storage panel (i.e., stimulable phosphor sheet) which is used in a radiation image recording and reproducing method utilizing its stimulability.

A radiation image storage panel has a basic structure comprising a support and a phosphor layer provided on one surface of the support, which comprises a binder and a stimulable phosphor dispersed therein. Further, a transparent protective film is generally provided on the free surface (surface not facing the support) of the phosphor layer to keep the phosphor layer from chemical deterioration or physical shock.

The radiation image recording and reproducing method using the above-described radiation image storage panel comprising the stimulable phosphor is a very advantageous method replacing the conventional radiography. As described, for example, in U.S.-A-4,239,968, the method involves the steps of causing the stimulable phosphor of the panel to absorb radiation energy having passed through an object or having radiated from an object; exciting the stimulable phosphor with an electromagnetic wave such as visible light and infrared rays (hereinafter referred to as "stimulating rays") to sequentially release the radiation energy stored in the stimulable phosphor as light emission (stimulated emission); photoelectrically detecting (reading out) the emitted light to obtain electric signals; and reproducing a visible image from the electric signals on a recording material such as a photosensitive film or on a display device such as CRT.

In the radiation image recording and reproducing method, a radiation image can be obtained with a sufficient amount of information by applying a radiation to the object at considerably smaller dose, as compared with the case of using the conventional radiography. Accordingly, this method is of great value especially when the method is used for medical diagnosis.

The radiation image recording and reproducing method is very advantageous for obtaining a visible image as described above, and the method is desired to have a sensitivity as high as possible. The sensitivity of the radiation image storage panel to a radiation generally increases as the luminance of stimulated emission of the phosphor employed in the panel increases. Accordingly, it is also desired that the luminance of stimulated emission of the phosphor employed in the panel is as high as possible. For enhancing the luminance of stimulated emission and/or spontaneous emission of the divalent europium activated barium fluorobromide phosphor, there are known various methods such as a method of incorporating metal oxide (e.g., silicon dioxide and aluminum oxide) into the phosphor as described in Japanese Patent Provisional Publication No. 55(1980)-160078, a method of incorporating sodium halide (NaX') into the phosphor as described in Japanese Patent Provisional Publications No. 56(1981)-212270 and No. 59(1984)-56479, and a method of substituting a portion of bromine contained in the phosphor by iodine as described in Japanese Patent Provisional Publication No. 60(1985)-90286.

However, in the case that the BaFBr:Eu$^{2+}$ phosphor is incorporated with NaX' or a portion of bromide contained in the BaFBr:Eu$^{2+}$ phosphor is substituted by iodine as described above, both the afterglow of stimulated emission (that is, the light which is continuously emitted by the stimulable phosphor after terminating the excitation with stimulating rays) and the afterglow of radiation (i.e., afterglow of spontaneous emission, that is, the light which is continuously emitted by the stimulable phosphor after being exposed to a radiation such as X-rays) tend to increase, though the luminance of stimulated emission is improved.

The afterglow of stimulated emission is detected as the light emitted by phosphor particles other than the aimed ones when the radiation image storage panel is sequentially scanned with stimulating rays such as a laser beam to detect the stimulated emission, and hence the afterglow of stimulated emission causes decrease of S/N ratio of the resulting image. As a result, deterioration of image quality (sharpness, density resolution, etc.) is brought about.

The afterglow of spontaneous emission (i.e., afterglow of radiation) causes decrease of S/N ratio of the resulting image when the phosphor is used for a radiographic intensifying screen in a conventional radiography, and also causes decrease of S/N ratio of the resulting image in the read-out procedure of exciting with stimulating rays after exposure to a radiation when the phosphor is used for a radiation image storage panel in the radiation image recording and reproducing method.

Accordingly, it is highly desired that the afterglow of stimulated emission and the afterglow of spontaneous emission are as small as possible. Particularly, it is of great value to improve the afterglow characteristics which give an adverse effect to the image quality, even if the improvement is not so high.

For the purpose of improving the afterglow characteristics of stimulated emission of a $BaFX:Eu^{2+}$ phosphor containing NaX', the present inventors previously disclosed a phosphor in which a portion of barium is substituted by calcium and a radiation image storage panel employing said phosphor, in Japanese Patent Provisional Publication No. 60(1985)-161478. The phosphor has the following formula:

$$(Ba_{1-a},Ca_a)FX \cdot bNaX':xEu^{2+}$$

in which each of X and X' is at least one halogen selected from the group consisting of $C\ell$, Br and I; and a, b and x are numbers satisfying the conditions of $0 < a \leqq 10^{-1}$, $0 < b \leqq 2.0$ and $0 < x \leqq 0.2$, respectively.

However, the above-mentioned phosphor containing calcium, particularly the phosphor further containing iodine, is not satisfactory in the afterglow characteristics of spontaneous emission, so that it is desired to improve the afterglow characteristics of the spontaneous emission which cause deterioration of the image quality.

For the same purpose as described above, the present inventors also disclosed a phosphor obtained by adding an alkali metal such as cesium to the $BaFX:Eu^{2+}$ phosphor containing NaX' and a radiation image storage panel using said phosphor, in Japanese Patent Provisional Publication No. 60(1985)-139781). The phosphor has the following formula:

$$BaFX \cdot aNaX':xEu^{2+},yM^l$$

in which each of X and X' is at least one halogen selected from the group consisting of $C\ell$, Br and I; $M^l$ is at least one alkali metal selected from the group consisting of K, Rb and Cs; and a, x and y are numbers satisfying the conditions of $0 < a \leqq 2.0$, $0 < x \leqq 0.2$ and $5x10^{-4} \leqq y \leqq 10^{-2}$, respectively.

In contrast, it is disclosed in Japanese Patent Publication No. 53(1988)-18470 that a BaFX:Eu phosphor containing cesium deteriorates in the afterglow characteristics of spontaneous emission.

Patent Abstracts of Japan, vol.10, No. 239 (C-367) [2295] discloses a divalent europium activated barium fluorohalide phosphor.

EP-A-0083071, EP-A-0102051 and EP-A-01071912 disclose a divalent europium activated barium fluorohalide phosphor which may contain at least one further alkaline earth metal, containing at least one alkali metal halide and a metal oxide.

It is the object of the present invention to provide a divalent europium activated barium fluorohalide phosphor which shows stimulated emission of high luminance and is improved in the afterglow characteristics of spontaneous emission, as well as to provide a radiation image storage panel which shows stimulated emission of high luminance and is improved in the afterglow characteristics of stimulated emission.

Said object is achieved by a divalent europium activated barium fluorohalide phosphor containing at least one further alkaline earth metal, at least one alkali metal halide and a metal oxide, characterized in that the phosphor has the general formula (I)

$$(Ba_{1-a},Ca_a)F(Br_{1-b},I_b) \cdot cNaX \cdot dCsX' \cdot eA:xEu^{2+} \qquad (I)$$

wherein X and X' each is at least one halogen selected from the group consisting of $C\ell$, Br and I; A is at least one metal oxide selected from the group consisting of $A\ell_2O_3$, $SiO_2$ and $ZrO_2$; and a, b, c, d, e and x are numbers satisfying the conditions of $0 < a \leqq 0.1$, $0 < b < 1$, $0 < c \leqq 2$, $5x10^{-5} \leqq d \leqq 5x10^{-2}$, $5x10^{-5} \leqq e \leqq 0.5$ and $0 < x \leqq 0.2$, respectively.

The radiation image storage panel of the present invention comprises a support and a stimulable phosphor layer provided thereon, in which the stimulable phosphor layer contains the divalent europium activated barium fluorohalide phosphor having the formula (I).

According to the present invention, the divalent europium activated barium fluorobromide phosphor containing metal oxide such as $A\ell_2O_3$, sodium halide (NaX) and iodine further contains calcium and cesium halide (CsX'), and thereby the afterglow characteristics of the spontaneous emission and the stimulated emission of the phosphor are remarkably improved with little lowering the stimulated emission of high luminance which is based on the incorporation of the metal oxide, sodium halide and iodine.

In more detail, it is known that the incorporation of cesium into a BaFX:Eu phosphor causes deterioration of the afterglow characteristics of spontaneous emission of the resulting phosphor as described hereinbefore, but it has been discovered that when the phosphor containing the above-mentioned components such as NaX further contains CsX', the resulting phosphor is prominently improved in the afterglow characteristics of spontaneous emission. Particularly, the afterglow of spontaneous emission extremely reduces within a period of approx. $10^1$ - $10^2$ s after exposure to a radiation such as X-rays.

Further, when the phosphor containing the above-mentioned components such as NaX contains a specific amount of cesium halide in addition to Ca, the resulting phosphor is much more improved in the afterglow characteristics of stimulated emission, and particularly the afterglow of the stimulated emission prominently reduces within a period of approx. $10^{-3}$ - $10^{-2}$ s, after excitation with stimulating rays after exposure to a radiation such as X-rays. The phosphor obtained by incorporating both of calcium and cesium in a specific ratio into the aforementioned divalent europium activated barium fluorohalide phosphor containing the additive components such as NaX is remarkably improved in the afterglow characteristics of the stimulated emission, as compared with that containing calcium and cesium only. It is presumed that such a remarkable improvement is obtained by a synergistic effect based on the usage of calcium and cesium in combination with other components such as iodine.

Furthermore, the divalent europium activated barium fluorohalide phosphor of the invention hardly varies in the luminance of stimulated emission when excited with electromagnetic waves in the wavelength region of 450 - 900 nm after exposure to a radiation such as X-rays, as compared with the phosphor containing neither calcium nor cesium.

Accordingly, the radiation image storage panel of the invention employing the divalent europium activated barium fluorohalide phosphor having the formula (I) is effective to enhance the sensitivity of the radiation image recording and reproducing method and stably provide an image of high quality.

Fig. 1 graphically shows afterglow characteristics of spontaneous emission with respect to the divalent europium activated barium fluorohalide phosphors according to the present invention (Curves 1 to 3) and a conventional phosphor (Curve 4).

Fig. 2 graphically shows the relationship between the amount of cesium bromide (d value) and the relative amount of afterglow of X-rays with respect to a $(Ba_{0.99},Ca_{0.01})F(Br_{0.85},I_{0.15})\cdot 0.001NaBr\cdot dCsBr\cdot 0.01A\ell_2O_3:0.001Eu^{2+}$ phosphor which is one example of the phosphor according to the present invention.

Fig. 3 graphically shows afterglow characteristics of stimulated emission with respect to the divalent europium activated barium fluorohalide phosphor according to the present invention (Curve 1) and conventional phosphors (Curves 2 and 3).

The phosphor of the invention having the formula (I) gives spontaneous emission when exposed to a radiation such as X-rays, and also gives stimulated emission when excited with an electromagnetic wave having a wavelength within the region of 450 - 900 nm after exposure to a radiation such as X-rays. From the viewpoint of the afterglow characteristics of the spontaneous emission and the stimulated emission, CsX' in the formula (I) preferably is CsBr, and the d value indicating the amount thereof preferably is within the range of $5x10^{-4} \leq d \leq 10^{-2}$.

From the viewpoint of the luminance of stimulated emission and the afterglow characteristics of the stimulated emission, the a value in the formula (I) which indicates the amount of calcium preferably is within the range of $10^{-3} \leq a \leq 5x10^{-2}$, more preferably within the range of $3x10^{-3} \leq a \leq 5x10^{-2}$.

From the viewpoint of the luminance of stimulated emission, the b value in the formula (I) which indicates the amount of iodine preferably is within the range of $0.1 \leq b \leq 0.8$. The stimulation spectrum of the phosphor of the invention is in the wavelength region of 450 - 900 nm as described above, and its peak shifts toward the longer wavelength side, as the amount of iodine becomes larger. Accordingly, also from the viewpoint of matching with sources of stimulating rays such as a He-Ne laser (633 nm) and a semiconductor laser (infrared rays) which are now proposed for employment in practical use, a portion of bromine is preferably substituted by iodine.

From the viewpoint of both luminance of the spontaneous emission and the stimulated emission, NaX in the formula (I) which indicates sodium halide preferably is NaBr, and the c value indicating the amount thereof preferably is within the range of $10^{-5} \leq c \leq 0.5$, more preferably within the range of $5x10^{-4} \leq c \leq 10^{-2}$.

From the same viewpoint, A in the formula (I) which indicates a metal oxide preferably is $SiO_2$ and/or $A\ell_2O_3$, and the e value indicating the amount thereof preferably is within the range of $5x10^{-4} \leq e \leq 0.3$, more preferably within the range of $10^{-3} \leq e \leq 0.2$. Addition of the metal oxide contributes to preventing sintering of the phosphor in the firing stage and improving the flowability of the resulting powdery phosphor.

From the viewpoint of both of the emission luminance and the afterglow characteristics, the x value in the formula (I) which indicates the amount of europium activator preferably is within the range of $10^{-5} \leq x \leq$

$10^{-2}$.

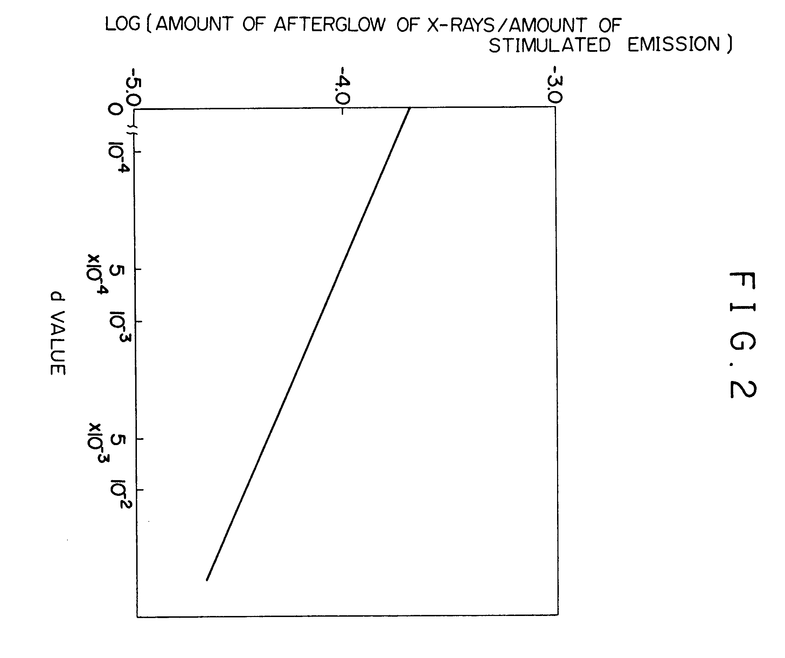

A $(Ba_{0.99},Ca_{0.01})F(Br_{0.85},I_{0.15}) \cdot 0.001NaBr \cdot dCsBr \cdot 0.01Al_2O_3 0.001Eu^{2+}$ phosphor (an example of the phosphor of the present invention) shows the relationship between the amount of cesium bromide (the d value) and the amount of afterglow of the spontaneous emission as shown in Fig. 2.

Fig. 2 is graphically shows a relationship between the d value and the relative amount of afterglow of X-rays measured at 10 s after the phosphor is exposed to X-rays at 80 KVp (logarithmic value of [amount of afterglow of X-rays/amount of stimulated emission]).

As is evident from Fig. 2, the relative amount of X-ray afterglow of the above-mentioned phosphor decreases to about a desired level (which means that the phosphor is improved in the afterglow characteristics of the spontaneous emission), when the amount of cesium bromide (the d value) is not less than $10^{-4}$. Particularly when the d value is not less than $5 \times 10^{-4}$, the afterglow characteristics of the spontaneous emission is remarkably improved. It has been confirmed that the same tendency as shown in Fig. 2 is observed for other divalent europium activated barium fluorohalide phosphors having the formula (I).

From the viewpoint of the fading property of the phosphor (fading property: lowering of amount of stimulated emission with time after exposure to a radiation), the amount of cesium halide (the d value) is as small as possible, so that the d value is set within the range of $5 \times 10^{-5} \leq d \leq 5 \times 10^{-2}$, preferably within the range of $5 \times 10^{-4} \leq d \leq 10^{-2}$.

The divalent europium activated barium fluorohalide phosphor of the invention basically has the aforementioned formula (I), and other various components may be further incorporated into the phosphor in the preparation thereof, as far as they do not decrease the effect given by the incorporation of Ca, CsX', etc. (that is, the improvement of the afterglow characteristics of spontaneous emission and stimulated emission). Phosphors containing such additive components are included in the phosphor of the invention. Examples of the additive component include the following substances:

tetrafluoroboric acid compounds as described in U.S. Patent Application No. 520,215;

hexafluoro compounds as described in U.S. Patent Application No. 502,648;

alkali metal halides ($M^{I}X''$, in which $M^{I}$ is at least one alkali metal selected from the group consisting of Li, K and Rb; and X" is at least one halogen selected from the group consisting of F, Cl, Br and I), divalent metal halides ($M^{II}X'''_2$, in which $M^{II}$ is at least one divalent metal selected from the group consisting of Be and Mg; and X''' is at least one halogen selected from the group consisting of F, Cl, Br and I), and trivalent metal halides ($M^{III}X''''_3$, in which $M^{III}$ is at least one trivalent metal selected from the group consisting of Ga, In and Tl; and X"" is at least one halogen selected from the group consisting of F, Cl, Br and I), as described in U.S. Patent Application No. 543,326;

scandium as described in Japanese Patent Provisional Publication No. 56(1981)-116777;

boron as described in Japanese Patent Provisional Publication No. 57(1982)-23673;

arsenic as described in Japanese Patent Provisional Publication No. 57(1982)-23675; and

transition metals as described in U.S. Patent Application No. 535,928.

The divalent europium activated barium fluorohalide phosphor of the present invention having the aforementioned formula (I) can be prepared, for instance, by the process described below.

As starting materials, the following materials can be employed:

(1) barium halide (except barium chloride);

(2) calcium halide (except calcium chloride );

(3) cesium halide (except cesium fluoride );

(4) sodium halide (except sodium fluoride);

(5) at least one metal oxide selected from the group consisting of silicon dioxide, aluminum oxide and zirconium oxide; and

(6) at least one compound selected from the group consisting of europium compounds such as europium halide, europium oxide, europium nitrate and europium sulfate. Further, ammonium halide may be employed as a flux.

In the first place, the above-mentioned barium halide (1), calcium halide (2), cesium halide (3), sodium halide (4), metal oxide (5) and europium compound (6) are mixed in a stoichiometric ratio corresponding to the formula (II):

$$(Ba_{1-a},Ca_a)F(Br_{1-b},I_b) \cdot cNaX \cdot dCsX' \cdot eA:xEu \qquad (III)$$

in which X, X', A, a, b, c, d, e and x have the meanings as defined above.

The mixing procedure is conducted, for instance, by mixing the starting materials in the form of a suspension. From the suspension of the starting material mixture, the solvent (e.g., water) is removed to obtain a dry mixture in a solid form. The removal of solvent is preferably carried out at room temperature or at a higher temperature (for instance, not higher than 200°C) by drying under reduced pressure and/or vacuum. The mixing procedure is by no means restricted to this one.

In a modification, there may be employed a procedure of mixing the starting materials (1), (6) and (7) in the form of a suspension, drying the suspension, and then adding the calcium halide (2), cesium halide (3), sodium halide (4) and metal oxide (5) to the dry mixture. Otherwise, the cesium halide (3), sodium halide (4) and metal oxide (5) may be added to the first fired product when the firing of the dry mixture is conducted twice.

In the second place, the obtained dry mixture is finely pulverized, and the pulverized mixture is then placed in a heat-resistant container such as a quartz boat or an alumina crucible and fired in an electric furnace. The firing procedure (first firing) is conducted at a temperature of 500 - 1300°C. The period of time for the firing varies depending on the amounts of the starting materials, the firing temperature, etc., but the period generally is 0.5 - 6 h. As the firing atmosphere, a weak reducing atmosphere such as a nitrogen gas atmosphere containing a small amount of hydrogen gas or a carbon dioxide gas atmosphere containing carbon monoxide gas is employed. When the employed europium compound contains trivalent europium, the trivalent europium is reduced to give divalent europium under the weak reducing atmosphere in the firing stage.

The fired product is taken out of the electric furnace, allowed to stand for cooling and pulverized. The pulverized product may be further fired (second firing). The second firing is conducted at a temperature of 500 - 800°C for 0.5 - 12 h in an inert atmosphere such as a nitrogen gas atmosphere or an argon gas atmosphere, or in the above-mentioned weak reducing atmosphere.

After the firing is complete, a powdery phosphor is obtained. The phosphor may be further processed in a conventional manner involving a variety of procedures for the preparation of phosphors such as a washing procedure, a drying procedure and a sieving procedure, if desired.

In the case that the phosphor of the invention contains such additive components as described hereinbefore, the additive components are incorporated into the suspension in the mixing procedure of the starting materials for the phosphor or into the dry mixture prior to the firing stage.

Thus, a divalent europium activated barium fluorohalide phosphor having the aforementioned formula (I) can be obtained.

The radiation image storage panel of the present invention will be described hereinafter.

The radiation image storage panel basically comprises a support and a phosphor layer provided thereon, which comprises a binder and a stimulable phosphor dispersed therein. The phosphor layer can be formed on the support, for instance, by the following procedure.

In the first place, the stimulable phosphor particles having the formula (I) and a binder are added to an appropriate solvent, and then they are well mixed to prepare a coating dispersion which comprises the phosphor particles homogeneously dispersed in the binder solution.

Examples of the binder to be contained in the phosphor layer include: natural polymers such as proteins (e.g. gelatin), polysaccharides (e.g. dextran) and gum arabic; and synthetic polymers such as polyvinyl butyral, polyvinyl acetate, nitrocellulose, ethylcellulose, vinylidene chloride-vinyl chloride copolymer, polyalkyl (meth)acrylate, vinyl chloride-vinyl acetate copolymer, polyurethane, cellulose acetate butyrate, polyvinyl alcohol, and linear polyester. Particularly preferred are nitrocellulose, linear polyester, polyalkyl (meth)acrylate, a mixture of nitrocellulose and linear polyester, and a mixture of nitrocellulose and polyalkyl (meth)acrylate. These binders may be crosslinked with a crosslinking agent.

Examples of the solvent employable in the preparation of the coating dispersion include lower alcohols such as methanol, ethanol, n-propanol and n-butanol; chlorinated hydrocarbons such as methylene chloride and ethylene chloride; ketones such as acetone, methyl ethyl ketone and methyl isobutyl ketone; esters of lower alcohols with lower aliphatic acids such as methyl acetate, ethyl acetate and butyl acetate; ethers such as dioxane, ethylene glycol monoethylether and ethylene glycol monoethyl ether; and mixtures of the above-mentioned compounds.

The ratio between the binder and the stimulable phosphor in the coating dispersion can be determined according to the characteristics of the aimed radiation image storage panel and the nature of the phosphor employed. Generally, the ratio therebetween is within the range of from 1 : 1 to 1 : 100 (binder : phosphor, by weight), preferably from 1 : 8 to 1 : 40.

The coating dispersion may contain a dispersing agent to improve the dispersibility of the phosphor particles therein; and may contain a variety of additives such as a plasticizer for increasing the bonding between the binder and the phosphor particles in the phosphor layer. Examples of the dispersing agent include phthalic acid, stearic acid, caproic acid and a hydrophobic surface active agent. Examples of the plasticizer include phosphates such as triphenyl phosphate, tricresyl phosphate and diphenyl phosphate;

phthalates such as diethyl phthalate and dimethoxyethyl phthalate; glycolates such as ethylphthalyl ethyl glycolate and butylphthalyl butyl glycolate; and polyesters of polyethylene glycols with aliphatic dicarboxylic acids such as polyester of triethylene glycol with adipic acid and polyester of diethylene glycol with succinic acid.

The coating dispersion containing the phosphor particles and the binder prepared as described above is evenly applied on the surface of a support to form a layer of the coating dispersion. The coating procedure can be carried out by a conventional method such as a method using a doctor blade, a roll coater or a knife coater.

After applying the coating dispersion on the support, the coating dispersion is then slowly heated to dryness so as to complete the formation of the phosphor layer. The thickness of the phosphor layer varies depending upon the characteristics of the aimed radiation image storage panel, the nature of the phosphor or the ratio of the binder to the phosphor. In general, the thickness of the phosphor layer is within a range of from 20 $\mu$m to 1 mm, and preferably within a range of from 50 to 500 $\mu$m.

The phosphor layer can be provided onto the support by methods other than that given above. For instance, the phosphor layer is initially prepared on a sheet material such as a glass plate, a metal plate or a plastic sheet using the aforementioned coating dispersion and then the thus prepared phosphor layer is superposed on the genuine support by pressing or using an adhesive agent.

The phosphor layer may consist of either a single layer or plural (two or more) layers. In the case of two or more phosphor layers, at least one layer contains the aforementioned divalent europium activated barium fluorohalide phosphor. In any cases of a single and plural layers, a variety of known stimulable phosphors can be employed in combination with the above phosphor.

The support material employed in the present invention can be selected from those employable for the radiogaphic intensifying screens in the conventional radiography or those employable for the known radiation image storage panel. Examples of the support material include plastic films such as films of cellulose acetate, polyester, polyethylene terephthalate, polyamide, polyimide, triacetate and polycarbonate; metal sheets such as aluminum foil and aluminum alloy foil; ordinary papers; baryta paper; resin-coated papers; pigment papers for example, containing titanium dioxide; and papers for example, sized with polyvinyl alcohol. From the viewpoint of characteristics of a radiation image storage panel as an information recording material, a plastic film is preferably employed as the support material of the invention. The plastic film may contain a light-absorbing material such as carbon black, or may contain a light-reflecting material such as titanium dioxide. The former is appropriate for preparing a high-sharpness type radiation image storage panel, while the latter is appropriate for preparing a high-sensitivity type radiation image storage panel.

In the preparation of a conventional radiation image storage panel, one or more additional layers are occasionally provided between the support and the phosphor layer to enhance the bonding strength between the support and the phosphor layer, or to improve the sensitivity of the panel or the quality of an image (sharpness and graininess) provided thereby. For instance, a subbing layer or an adhesive layer may be provided by coating a polymer material such as gelatin over the surface of the support on the phosphor layer-side. Otherwise, a light-reflecting layer or a light-absorbing layer may be provided by forming a polymer material layer containing a light-reflecting material such as titanium dioxide or a light-absorbing material such as carbon black. In the present invention, one or more of these additional layers may be provided on the support.

As described in U.S. Patent Application No. 496,278, the phosphor layer-side surface of the support (or the surface of an adhesive layer, light-reflecting layer, or light-absorbing layer in the case where such layers are provided on the phosphor layer) may be provided with protruded and depressed portions for the enhancement of the sharpness of the resulting image.

The radiation image storage panel generally has a transparent protective film on a free surface of the phosphor layer (surface not facing a support) to protect the phosphor layer from physical and chemical deterioration. In the radiation image storage panel of the present invention, it is preferable to provide a transparent protective film for the same purpose.

The protective film can be provided onto the phosphor layer by coating the surface of the phosphor layer with a solution of a transparent polymer such as a cellulose derivative (e.g., cellulose acetate or nitrocellulose), or a synthetic polymer (e.g., polymethyl methacrylate, polyvinyl butyral, polyvinyl formal, polycarbonate, polyvinyl acetate, or vinyl chloride-vinyl acetate copolymer), and drying the coated solution. Alternatively, the protective film can be provided onto the phosphor layer by beforehand preparing it from a polymer such as polyethylene terephthalate, polyethylene, polyvinylidene chloride or polyamide, followed by placing and fixing it onto the phosphor layer with an appropriate adhesive agent. The transparent protective film preferably has a thickness within the range of approx. 3 to 20 $\mu$m.

For the enhancement of sharpness of the resulting image, at least a portion of the radiation image storage panel of the present invention may be colored with a colorant, as described in U.S.-A-4,394,581 and U.S. Patent Application No. 326,642. For the same purpose, the phosphor layer of the radiation image storage panel according to the present invention may contain a white powder, as described in U.S.-A-4,350,893.

The present invention will be illustrated by the following examples and comparison examples.

Example 1

To 500 mℓ of distilled water ($H_2O$) were added 175.34 g of barium fluoride ($BaF_2$), 333.18 g of barium bromide ($BaBr_2 \cdot 2H_2O$) and 0.783 g of europium bromide ($EuBr_3$), and they were mixed to give a suspension. The suspension was dried at 60°C under reduced pressure for 3 h and further dried at 150°C under vacuum for another 3 h. The dry product was finely pulverized in a mortar, to give a pulverized product A.

Separately, to 500 mℓ of distilled water ($H_2O$) were added 175.34 g of barium fluoride ($BaF_2$), 427.15 g of barium iodide ($BaI_2 \cdot 2H_2O$) and 0.783 g of europium bromide ($EuBr_3$), and they were mixed to give a suspension. The suspension was dried at 60°C under reduced pressure for 3 h and further dried at 150°C under vacuum for another 3 h. The dry product was finely pulverized in a mortar to give a pulverized product B.

To a mixture of 200.8 g of the pulverized product A and 42.5 g of the pulverised product B were added 0.78 g of calcium fluoride ($CaF_2$), 0.103 g of sodium bromide ($NaBr$), 0.32 g. of cesium bromide ($CsBr$) and 1.02 g of aluminum oxide ($Aℓ_2O_3$), and they were mixed to prepare a mixture of starting materials for a phosphor.

Then, the mixture of starting materials was placed in an alumina crucible, which was, in turn, placed in a high-temperature electric furnace for firing. The firing was done at 900°C for 1.5 h in a carbon dioxide gas atmosphere containing a small amount of carbon monoxide gas. After the firing was complete, the crucible was taken out of the furnace and allowed to stand for cooling. The fired product was pulverized to obtain a powdery divalent europium activated barium fluorohalide phosphor $[(Ba_{0.99},Ca_{0.01})F(Br_{0.85},I_{0.15})\cdot 0.001NaBr \cdot 0.0015CsBr \cdot 0.01Aℓ_2O_3 : 0.001Eu^{2+}]$.

Subsequently, using the obtained phosphor, a radiation image storage panel was prepared in the following manner.

To a mixture of the phosphor particles and a linear polyester resin were successively added methyl ethyl ketone and nitrocellulose (nitration degree: 11.5 %), to prepare a dispersion containing the phosphor particles. Then, tricresyl phosphate, n-butanol and methyl ethyl ketone were added to the dispersion, and the mixture was sufficiently stirred by means of a propeller agitater to obtain a homogeneous coating dispersion containing the binder and the phosphor particles in the ratio of 1 : 20 (binder : phosphor, by weight) and having a viscosity of 2,5 - 3,5 Pa·s (25 - 35 PS) (at 25°C).

The coating dispersion was applied onto a polyethylene terephthalate sheet containing titanium dioxide (support, thickness: 250 $\mu$m) placed horizontally on a glass plate. The application of the coating dispersion was carried out using a doctor blade. After the coating was complete, the support having the coated layer of the dispersion was placed in an oven and heated at a temperature gradually rising from 25 to 100°C. Thus, a phosphor layer having the thickness of approx. 200 $\mu$m was formed on the support.

On the phosphor layer was placed a transparent polyethylene terephthalate film (thickness: 12 $\mu$m; provided with a polyester adhesive layer) to combine the film and the phosphor layer with the adhesive layer. Thus, a radiation image storage panel consisting essentially of a support, a phosphor layer and a transparent protective film was prepared.

Example 2

The procedure of Example 1 was repeated except for varying the amount of cesium bromide to 1.28 g , to obtain a powdery divalent europium activated barium fluorohalide phosphor $[(Ba_{0.99},Ca_{0.01})F(Br_{0.85},I_{0.15})\cdot 0.001NaBr \cdot 0.006CsBr \cdot 0.01Aℓ_2O_3 : 0.001Eu^{2+}]$.

Using the obtained phosphor, a radiation image storage panel consisting essentially of a support, a phosphor layer and a transparent protective film was prepared in the same manner as described in Example 1.

Example 3

The procedure of Example 1 was repeated except for varying the amount of cesium bromide to 5.12 g , to obtain a powdery divalent europium activated barium fluorohalide phosphor [$(Ba_{0.99},Ca_{0.01})F(Br_{0.85},I_{0.15})$• $0.001NaBr$•$0.024CsBr$•$0.01Al_2O_3$:$0.001Eu^{2+}$].

Using the obtained phosphor, a radiation image storage panel consisting essentially of a support, a phosphor layer and a transparent protective film was prepared in the same manner as described in Example 1.

## Comparison Example 1

The procedure of Example 1 was repeated except for adding no cesium bromide to the pulverized product, to obtain a powdery divalent europium activated barium fluorohalide phosphor [$(Ba_{0.99},Ca_{0.01})F(Br_{0.85},I_{0.15})$•$0.001NaBr$•$0.01Al_2O_3$:$0.001Eu^{2+}$].

Using the obtained phosphor, a radiation image storage panel consisting essentially of a support, a phosphor layer and a transparent protective film was prepared in the same manner as described in Example 1.

## Comparison Example 2

The procedure of Example 1 was repeated except for adding no calcium fluoride to the pulverized product, to obtain a powdery divalent europium activated barium fluorohalide phosphor [$BaF(Br_{0.85},I_{0.15})$• $0.001NaBr$•$0.0015CsBr$•$0.01Al_2O_3$:$0.001Eu^{2+}$].

Using the obtained phosphor, a radiation image storage panel consisting essentially of a support, a phosphor layer and a transparent protective film was prepared in the same manner as described in Example 1.

## Comparison Example 3

The procedure of Example 1 was repeated except for adding no calcium fluoride and no cesium bromide to the pulverized product, to obtain a powdery divalent europium activated barium fluorohalide phosphor [$BaF(Br_{0.85},I_{0.15})$•$0.001NaBr$•$0.01Al_2O_3$:$0.001Eu^{2+}$].

Using the obtained phosphor, a radiation image storage panel consisting essentially of a support, a phosphor layer and a transparent protective film was prepared in the same manner as described in Example 1.

The phosphors and the radiation image storage panels prepared in Examples 1 to 3 and Comparison Examples 1 to 3 were evaluated with respect to the afterglow characteristics of the spontaneous emission (i.e., afterglow characteristics of X-rays) and the afterglow characteristics of the stimulated emission according to the following tests.

(1) Afterglow characteristics of spontaneous emission

The phosphor was exposed to X-rays at a voltage of 80 KVp and a current of 300 mA for 0.4 s, to examine the decay of afterglow of X-rays. The evaluation was done by the relative amount of afterglow of X-rays, namely the relative value of [amount of afterglow of X-rays/amount of stimulated emission], wherein the amount of afterglow of X-rays is the value measured at 10 s after exposure to X-rays.

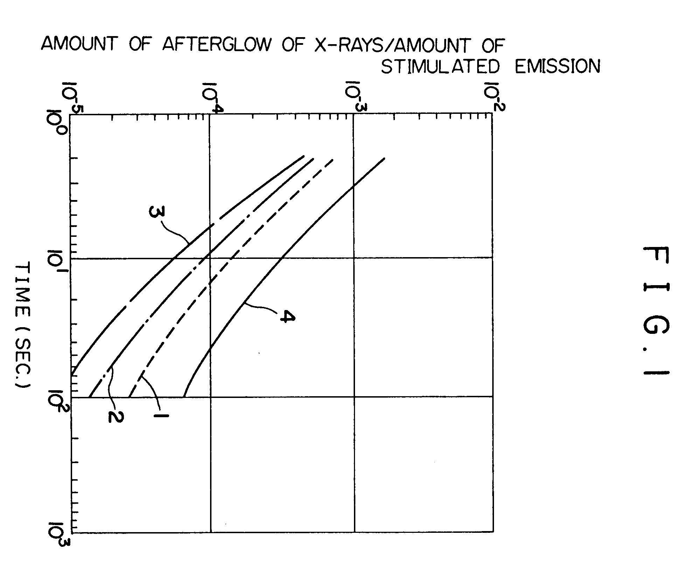

The results are graphically shown in Figs. 1 and 2.

Fig. 1 illustrates graphs in which the time is plotted as the abscissa and the value of [amount of afterglow of X-ray/amount of stimulated emission] as the ordinate. Curves 1 to 4 correspond to the following phosphors.

Curve 1:  $(Ba_{0.99},Ca_{0.01})F(Br_{0.85},I_{0.15})$•$0.001NaBr$•$0.0015CsBr$•$0.01Al_2O_3$:$0.001Eu^{2+}$ phosphor (Example 1)

Curve 2:  $(Ba_{0.99},Ca_{0.01})F(Br_{0.85},I_{0.15})$•$0.001NaBr$•$0.006CsBr$•$0.01Al_2O_3$:$0.001Eu^{2+}$ phosphor (Example 2)

Curve 3:  $(Ba_{0.99},Ca_{0.01})F(Br_{0.85},I_{0.15})$•$0.001NaBr$•$0.024CsBr$•$0.01Al_2O_3$:$0.001Eu^{2+}$ phosphor (Example 3)

Curve 4:  $(Ba_{0.99},Ca_{0.01})F(Br_{0.85},I_{0.15})$•$0.001NaBr$•$0.01Al_2O_3$:$0.001Eu^{2+}$ phosphor (Comparison Example 1)

Fig. 2 illustrates a graph in which the amount of cesium bromide (the d value) is plotted as the abscissa and the logarithmic value of [amount of afterglow of X-rays/amount of stimulated emission] as the ordinate.

As is clear from Fig. 1, the divalent europium activated barium fluorohalide phosphors containing calcium and cesium bromide according to the invention (Examples 1 to 3) were prominently reduced in the amount of afterglow of the spontaneous emission, as compared with the conventional phosphor containing only calcium (Comparison Example 1).

As is clear from Figs. 1 and 2, the afterglow characteristics of spontaneous emission were improved as the amount of cesium bromide contained in the phosphor increased, and the logarithmic value of [amount of afterglow of X-rays / amount of stimulated emission] was -4.0 when the d value was $5 \times 10^{-4}$.

(2) Afterglow characteristics of stimulated emission

The radiation image storage panel was cut to give a test strip having a width of 7 cm. The test strip was exposed to X-rays at 80 KVp and subsequently once scanned with a He-Ne laser beam (wavelength: 632.8 nm) in the direction of its width in the scanning period of $5 \times 10^{-3}$ s, to measure the decay of afterglow of the stimulated emission. The evaluation was done by the relative amount of afterglow of stimulated emission, namely the relative value of [amount of afterglow of stimulated emission/amount of stimulated emission], wherein the amount of afterglow of stimulated emission is the value measured at $2 \times 10^{-3}$ s after scanning with the laser beam.

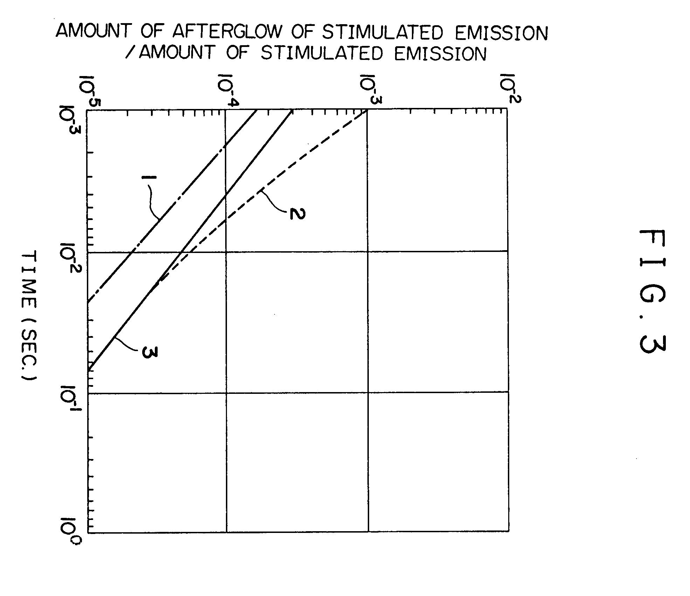

The results of the evaluation are shown in Fig. 3 and also set forth in Table 1.

Fig. 3 illustrates graphs in which the time is plotted as the abscissa and the value of [amount of afterglow of stimulated emission/amount of stimulated emission] as the ordinate. Curves 1 to 3 correspond to the following phosphors.

Curve 1: $(Ba_{0.99},Ca_{0.01})F(Br_{0.85},I_{0.15})\cdot 0.001NaBr\cdot 0.0015CsBr\cdot 0.01A\ell_2O_3:0.001Eu^{2+}$ phosphor (Example 1)

Curve 2: $(Ba_{0.99},Ca_{0.01})F(Br_{0.85},I_{0.15})\cdot 0.001NaBr\cdot 0.01A\ell_2O_3:0.001Eu^{2+}$ phosphor (Comparison Example 1)

Curve 3: $BaF(Br_{0.85},I_{0.15})\cdot 0.001NaBr\cdot 0.0015CsBr\cdot 0.01A\ell_2O_3:0.001Eu^{2+}$ phosphor (Comparison Example 2)

Table 1

| | Relative Amount of Afterglow of Stimulated Emission |
|---|---|
| Example 1 | $10^{-4}$ |
| Example 2 | $8 \times 10^{-5}$ |
| Com. Example 1 | $4 \times 10^{-4}$ |
| Com. Example 2 | $2 \times 10^{-4}$ |
| Com. Example 3 | $5 \times 10^{-4}$ |

As is clear from Fig. 3 or Table 1, the radiation image storage panel according to the invention (Example 1) which comprises the divalent europium activated barium fluorobromide phosphor containing calcium and cesium bromide was extremely reduced in the amount of afterglow of stimulated emission and showed prominently improved afterglow characteristics of the stimulated emission, as compared with the conventional panels, that is, the panel comprising a phosphor containing only calcium (Comparison Example 1), the panel comprising a phosphor containing only cesium (Comparison Example 2) and the panel comprising a phosphor not containing calcium and cesium (Comparison Example 3).

**Claims**

1. A divalent europium activated barium fluorohalide phosphor containing at least one further alkaline earth metal, at least one alkali metal halide and a metal oxide, **characterized in that** the phosphor has the general formula (I)

$(Ba_{1-a},Ca_a)F(Br_{1-b},I_b)\cdot cNaX\, dCsX'\cdot eA:xEu^{2+}$    (I)

wherein

X and X' each is at least one halogen selected from the group consisting of Cl, Br and I;

10

A is at least one metal oxide selected from the group consisting of $Al_2O_3$, $SiO_2$ and $ZrO_2$; and
a, b, c, d, e and x are numbers satisfying the conditions of
$0 < a \leqq 0.1$,
$0 < b < 1$,
$0 < c \leqq 2$,
$5 \times 10^{-5} \leqq d \leqq 5 \times 10^{-2}$,
$5 \times 10^{-5} \leqq e \leqq 0.5$ and
$0 < x \leqq 0.2$, respectively.

2. The phosphor of claim 1, in which d in the formula (I) is a number satisfying the condition of $5 \times 10^{-4} \leq d \leq 10^{-2}$.

3. The phosphor of claim 1, in which X in the formula (I) is Br.

4. The phosphor of claim 1, in which a in the formula (I) is a number satisfying the condition of $10^{-3} \leq a \leq 5 \times 10^{-2}$.

5. The phosphor of claim 1, in which b in the formula (I) is a number satisfying the condition of $0.1 \leq b \leq 0.8$.

6. The phosphor of claim 1, in which c in the formula (I) is a number satisfying the condition of $10^{-5} \leq c \leq 0.5$.

7. The phosphor of claim 1, in which X in the formula (I) is Br.

8. The phosphor of claim 1, in which e in the formula (I) is a number satisfying the condition of $5 \times 10^{-4} \leq e \leq 0.3$.

9. The phosphor of claim 1, in which x in the formula (I) is a number satisfying the condition of $10^{-5} \leq x \leq 10^{-2}$.

10. A radiation image storage panel comprising a support and a stimulable phosphor layer provided thereon, wherein the stimulable phosphor layer contains a divalent europium activated barium fluorohalide phosphor having the formula (I):

$$(Ba_{1-a}, C_a)F(Br_{1-b}, I_b) \bullet cNaX \bullet dCsX' \bullet eA : xEu^{2+} \qquad (I)$$

wherein
X and X' each is at least one halogen selected from the group consisting of Cl, Br and I;
A is at least one metal oxide selected from the group consisting of $Al_2O_3$, $SiO_2$ and $ZrO_2$; and
a, b, c, d, e and x are numbers satisfying the conditions of $0 < a \leq 0.1$, $0 < b < 1$, $0 < c \leq 2$, $5 \times 10^{-5} \leq d \leq 5 \times 10^{-2}$, $5 \times 10^{-5} \leq e \leq 0.5$ and $0 < x \leq 0.2$, respectively.

11. The radiation image storage panel of claim 10, in which d in the formula (I) is a number satisfying the condition of $5 \times 10^{-4} \leq d \leq 10^{-2}$.

12. The radiation image storage panel of claim 10, in which X in the formula (I) is Br.

13. The radiation image storage panel of claim 10, in which a in the formula (I) is a number satisfying the condition of $10^{-3} \leq a \leq 5 \times 10^{-2}$.

14. The radiation image storage panel of claim 10, in which b in the formula (I) is a number satisfying the condition of $0.1 \leq b \leq 0.8$.

15. The radiation image storage panel of claim 10, in which c in the formula (I) is a number satisfying the condition of $10^{-5} \leq c \leq 0.5$.

16. The radiation image storage panel of claim 10, in which X in the formula (I) is Br.

11

**17.** The radiation image storage panel of claim 10, in which e in the formula (I) is a number satisfying the condition of $5 \times 10^{-4} \leqq e \leqq 0.3$.

**18.** The radiation image storage panel of claim 10, in which x in the formula (I) is a number satisfying the condition of $10^{-5} \leqq x \leqq 10^{-2}$.

**Revendications**

**1.** Un matériau luminescent à base de fluorohalogénure de baryum activé par l'europium divalent contenant au moins un autre métal alcalino-terreux, au moins un halogénure de métal alcalin et un oxyde métallique, caractérisé en ce que le matériau luminescent répond à la formule générale (I) :

$$(Ba_{1-a}, Ca_a)F(Br_{1-b}, I_b) \cdot cNaX \, dCsX' \cdot eA:xEu^{2+} \qquad (I)$$

dans laquelle
X et X' représentent chacun au moins un halogène choisi parmi Cl, Br et I ;
A est au moins un oxyde métallique choisi parmi $Al_2O_3$, $SiO_2$ et $ZrO_2$ ; et
a, b, c, d, e et x sont des nombres satisfaisant les conditions suivantes :
$0 < a \leqq 0,1$,
$0 < b < 1$,
$0 < c \leqq 2$,
$5 \times 10^{-5} \leqq d \leqq 5 \times 10^{-2}$,
$5 \times 10^{-5} \leqq e \leqq 0,5$ et
$0 < x \leqq 0,2$, respectivement.

**2.** Le matériau luminescent selon la revendication 1, caractérisé en ce que d dans la formule (I) satisfait la condition $5 \times 10^{-4} \leqq d \leqq 10^{-2}$.

**3.** Le matériau luminescent selon la revendication 1, caractérisé en ce que X dans la formule (I) est Br.

**4.** Le matériau luminescent selon la revendication 1, caractérisé en ce que a dans la formule (I) satisfait la condition $10^{-3} \leqq a \leqq 5 \times 10^{-2}$.

**5.** Le matériau luminescent selon la revendication 1, caractérisé en ce que b dans la formule (I) satisfait la condition $0,1 \leqq b \leqq 0,8$.

**6.** Le matériau luminescent selon la revendication 1, caractérisé en ce que c dans la formule (I) satisfait la condition $10^{-5} \leqq c \leqq 0,5$.

**7.** Le matériau luminescent selon la revendication 1, caractérisé en ce que X' dans la formule (I) est Br.

**8.** Le matériau luminescent selon la revendication 1, caractérisé en ce que e dans la formule (I) satisfait la condition $5 \times 10^{-4} \leqq e \leqq 0,3$.

**9.** Le matériau luminescent selon la revendication 1, caractérisé en ce que x dans la formule (I) satisfait la condition $10^{-5} \leqq x \leqq 10^{-2}$.

**10.** Un panneau de stockage d'une image formée par rayonnement comprenant un support portant une couche d'un matériau luminescent stimulable, caractérisé en ce que la couche de matériau luminescent stimulable contient un matériau luminescent à base de fluorohalogénure de baryum activé par l'europium divalent répondant à la formule (I) :

$$(Ba_{1-a}, Ca_a)F(Br_{1-b}, I_b) \cdot cNaX \, dCsX' \cdot eA:xEu^{2+} \qquad (I)$$

dans laquelle
X et X' représentent chacun au moins un halogène choisi parmi Cl, Br et I ;
A est au moins un oxyde métallique choisi parmi $Al_2O_3$, $SiO_2$ et $ZrO_2$ ; et
a, b, c, d, e et x sont des nombres satisfaisant les conditions suivantes : $0 < a \leqq 0,1$, $0 < b < 1$, $0 < c \leqq$

2, 5 x $10^{-5}$ ≤ d ≤ 5 x $10^{-2}$, 5 x $10^{-5}$ ≤ e ≤ 0,5 et 0 < x ≤ 0,2, respectivement.

**11.** Le panneau de stockage d'une image formée par rayonnement selon la revendication 10, caractérisé en ce que d dans la formule (I) satisfait la condition 5 x $10^{-4}$ ≤ d ≤ $10^{-2}$.

**12.** Le panneau de stockage selon la revendication 10, caractérisé en ce que X dans la formule (I) est Br.

**13.** Le panneau de stockage selon la revendication 10, caractérisé en ce que a dans la formule (I) satisfait la condition $10^{-3}$ ≤ a ≤ 5 x $10^{-2}$.

**14.** Le panneau de stockage selon la revendication 10, caractérisé en ce que b dans la formule (I) satisfait la condition 0,1 ≤ b ≤ 0,8.

**15.** Le panneau de stockage selon la revendication 10, caractérisé en ce que c dans la formule (I) satisfait la condition $10^{-5}$ ≤ c ≤ 0,5.

**16.** Le panneau de stockage selon la revendication 10, caractérisé en ce que X' dans la formule (I) est Br.

**17.** Le panneau de stockage selon la revendication 10, caractérisé en ce que e dans la formule (I) satisfait la condition 5 x $10^{-4}$ ≤ e ≤ 0,3.

**18.** Le panneau de stockage selon la revendication 10, caractérisé en ce que x dans la formule (I) satisfait la condition $10^{-5}$ ≤ x ≤ $10^{-2}$.

**Patentansprüche**

**1.** Mit zweiwertigem Europium aktivierter Bariumfluorhalogenidleuchtstoff, enthaltend wenigstens ein weiteres Erdalkalimetall, wenigstens ein Alkalimetallhalogenid und ein Metalloxid, **dadurch gekennzeichnet,** daß der Leuchtstoff die allgemeine Formel I

$(Ba_{1-a},Ca_a)F(Br_{1-b},I_b) \cdot cNaX \cdot dCsX' \cdot eA:xEu^{2^+}$   (I)

besitzt, worin X und X jeweils wenigstens ein Halogen gewählt aus der Gruppe, bestehend aus Cl, Br und I, ist;
A wenigstens ein Metalloxid, gewählt aus der Gruppe, bestehend aus $Al_2O_3$, $SiO_2$ und $ZrO_2$, ist; und
a, b, c, d, e und x Zahlen sind, die den Bedingungen
$0<a≤0,1$,
$0<b<1$,
$0<c≤2$,
$5x10^{-5}≤d≤5x10^{-2}$,
$5x10^{-5}≤e≤0,5$ bzw.
$0<x≤0,2$
genügen.

**2.** Leuchtstoff nach Anspruch 1, worin d in der Formel (I) eine Zahl ist, die der Bedingung $5x10^{-4}≤d≤10^{-2}$ genügt.

**3.** Leuchtstoff nach Anspruch 1, worin X in der Formel (I) Br ist.

**4.** Leuchtstoff nach Anspruch 1, worin a in der Formel (I) eine Zahl ist, die der Bedingung $10^{-3}≤a≤5x10^{-2}$ genügt.

**5.** Leuchtstoff nach Anspruch 1, worin b in der Formel (I) eine Zahl ist, die der Bedingung $0,1≤b≤0,8$ genügt.

**6.** Leuchtstoff nach Anspruch 1, worin c in der Formel (I) eine Zahl ist, die der Bedingung $10^{-5}≤c≤0,5$ genügt.

13

**7.** Leuchtstoff nach Anspruch 1, worin X' in der Formel (I) Br ist.

**8.** Leuchtstoff nach Anspruch 1, worin e in der Formel (I) eine Zahl ist, die der Bedingung $5 \times 10^{-4} \leq e \leq 0,3$ genügt.

**9.** Leuchtstoff nach Anspruch 1, worin x in der Formel (I) eine Zahl ist, die der Bedingung $10^{-5} \leq x \leq 10^{-2}$ genügt.

**10.** Strahlungsbildspeicherplatte, umfassend einen Träger und eine darauf befindliche stimulierbare Leuchtstoffschicht, worin die stimulierbare Leuchtstoffschicht einen mit zeiwertigem Europium aktivierten Bariumfluorhalogenidleuchtstoff mit der Formel (I)

$$(Ba_{1-a},Ca_a)F(Br_{1-b},I_b) \bullet cNaX \bullet dCsX' \bullet eA:xEu^{2+} \qquad (I)$$

enthält,
worin X und X jeweils wenigstens ein Halogen, gewählt aus der Gruppe, bestehend aus Cl, Br und I, ist;
A wenigstens ein Metalloxid, gewählt aus der Gruppe, bestehend aus $Al_2O_3$, $SiO_2$ und $ZrO_2$, ist; und
a, b, c, d, e und x Zahlen sind, die den Bedingungen $0 < a \leq 0,1$, $0 < b < 1$, $0 < c \leq 2$, $5 \times 10^{-5} \leq d \leq 5 \times 10^{-2}$, $5 \times 10^{-5} \leq e \leq 0,5$ bzw. $0 < x \leq 0,2$ genügen.

**11.** Strahlungsbildspeicherplatte nach Anspruch 10, worin d in der Formel (I) eine Zahl ist, die der Bedingung $5 \times 10^{-4} \leq d \leq 10^{-2}$ genügt.

**12.** Strahlungsbildspeicherplatte nach Anspruch 10, worin X in der Formel (I) Br ist.

**13.** Strahlungsbildspeicherplatte nach Anspruch 10, worin a in der Formel (I) eine Zahl ist, die der Bedingung $10^{-3} \leq a \leq 5 \times 10^{-2}$ genügt.

**14.** Strahlungsbildspeicherplatte nach Anspruch 10, worin b in der Formel (I) eine Zahl ist, die der Bedingung $0,1 \leq b \leq 0,8$ genügt.

**15.** Strahlungsbildspeicherplatte nach Anspruch 10, worin c in der Formel (I) eine Zahl ist, die der Bedingung $10^{-5} \leq c \leq 0,5$ genügt.

**16.** Strahlungsbildspeicherplatte nach Anspruch 10, worin X' in der Formel (I) Br ist.

**17.** Strahlungsbildspeicherplatte nach Anspruch 10, worin e in der Formel (I) eine Zahl ist, die der Bedingung $5 \times 10^{-4} \leq e \leq 0,3$ genügt.

**18.** Strahlungsbildspeicherplatte nach Anspruch 10, worin x in der Formel (I) eine Zahl ist, die der Bedingung $10^{-5} \leq x \leq 10^{-2}$ genügt.

# F I G . I

# F I G . 2

# F I G . 3